# EUROPÄISCHE PATENTSCHRIFT

(11) **EP 1 117 940 B1**
(45) Veröffentlichungstag und Bekanntmachung des Hinweises auf die Patenterteilung: **27.10.2004**
(21) Anmeldenummer: 00945519.7
(22) Anmeldetag: 03.08.2000
(51) Int. Cl.: F16B 7/14

(54) **GEWINDESTANGE UND GEWINDESTANGENANORDNUNG**
THREADED ROD AND THREADED ROD ARRANGEMENT
TIGE FILETEE ET DISPOSITIF DE TIGES FILETEES

(30) Priorität: 03.08.1999 CH 142299
(43) Veröffentlichungstag der Anmeldung: 25.07.2001
(73) Patentinhaber: Weber-Stettler, Margrit, 3764 Weissenburg (CH); Weber-Stettler, Hugo, 3764 Weissenburg (CH)
(72) Erfinder: WEBER-STETTLER, Hugo, CH-3764 Weissenburg (CH)
(74) Vertreter: Felber, Josef
(86) Internationale Anmeldenummer: PCT/CH2000/000414
(87) Internationale Veröffentlichungsnummer: WO 2001/009523

(56) Entgegenhaltungen:
- FR-A- 2 609 927
- US-A- 4 081 219
- US-A- 4 170 425
- US-A- 4 798 404

## Beschreibung

### Technisches Gebiet

Die Erfindung betrifft eine Gewindestange und eine Gewindestangenanordnung nach dem Oberbegriff der unabhängigen Patentansprüche.

### Stand der Technik

Mit Gewinden versehene Formteile wie Schraubenbolzen, Muttern, Gewindestangen, Gewindespindeln etc. sind in einer Vielzahl von Ausführungsformen bekannt und werden üblicherweise zu Befestigungs-, Verstell-, Kraftübertragungs- und/oder Bewegungsübertragungszwecken verwendet. Unter einer Gewindestange wird irgend ein längliches, zylindrisches Formteil in Form einer Stange verstanden, die mit wenigstens einem Schraubengewinde versehen ist, welches sich über die ganze Länge der Stange oder bloss über einen Längsabschnitt der Stange erstrecken kann, wobei die Stange massiv oder hohl sein kann und im Falle einer hohlen Gewindestange diese mit einem Innengewinde an ihrer Innenfläche und/oder mit einem Aussengewinde an ihrer Aussenfläche versehen sein kann.

Für Verstellzwecke, d.h. zum Verstellen der Positionen von zwei mit Gewinde versehenen Teilen bezüglich einander, ist einerseits während des Verstellens ein grosser Vorschub pro Umdrehung erwünscht, damit das Verstellen rasch vollbracht werden kann. Andrerseits sollen die beiden Teile nach dem Verstellen fest miteinander verbunden sein, damit die einmal eingestellte Position der beiden Teile bezüglich einander erhalten bleibt.

### Darstellung der Erfindung

Aufgabe der Erfindung ist die Angabe einer Gewindestange und einer Anordnung aus Gewindestangen, die kostengünstig und insbesondere auch für Verstellzwecke geeignet sind.

Die Lösung der Aufgabe ist durch die Merkmale der unabhängigen Ansprüche definiert. Gemäss der Erfindung ist eine Gewindestange aus einem Material gefertigt, das überwiegend aus zusammengepressten Holzspänen besteht.

Unter einem Material, das überwiegend aus zusammengepressten Holzspänen besteht, wird im Zusammenhang mit der vorliegenden Beschreibung und den Ansprüchen ein Material verstanden, das zu über 50% aus zusammengepressten Holzspänen besteht. Als Holzspäne werden Holzpartikel mit einer Grösse von typischerweise zwischen 0.5 mm und 10 mm bezeichnet, wobei jedoch auch kleinere oder grössere Holzpartikel nicht ausgeschlossen sind. Die Holzspäne können insbesondere auch Sägespäne sein, die als Abfall beim Sägen von Holz entstehen und mitunter auch als Sägemehl bezeichnet werden.

Die Gewindestange ist gemäss der Erfindung aus einem Material gefertigt, das überwiegend aus zusammengepressten Holzspänen besteht. Dieses Material weist vergleichsweise grosse Reibungskoeffizienten sowohl hinsichtlich der Haftreibung als auch hinsichtlich der Gleitreibung auf. Somit weist insbesondere auch das Gewinde der erfindungsgemässen Gewindestange eine vergleichsweise grosse Reibung auf. Dadurch wird die Möglichkeit geschaffen, das Gewinde der erfindungsgemässen Gewindestange derart auszubilden, dass es einen vergleichsweise grossen Steigungswinkel hat, ohne dass durch diesen grossen Steigungswinkel die für Anwendungen der Gewindestange zu Verstellzwecken erwünschte Selbsthemmung des Gewindes verloren geht. Durch den grossen Steigungswinkel des Gewindes wird einerseits gewährleistet, dass pro Gewindeumdrehung ein grosser Vorschub erreicht wird, wie es für ein rasches Verstellen der Gewindestange gegenüber einem mit dieser über das Gewinde verschraubbar gekoppelten Teil erwünscht ist. Andrerseits wird durch die grosse Reibung des Gewindes gewährleistet, dass sich die Gewindestange und das mit ihm gekoppelte Teil nicht unerwünschterweise selbsttätig gegeneinander verstellen, wie dies z.B. im Falle von in Stangenlängsrichtung wirkenden Belastungen zwischen der Gewindestange und dem mit ihm gekoppelten Teil bei Gewinden mit kleiner Reibung geschehen könnte.

Das überwiegend aus zusammengepressten Holzspänen bestehende Material der erfindungsgemässen Gewindestange weist den weiteren Vorteil auf, dass es vergleichsweise kostengünstig ist, da es zu einem wesentlichen Teil aus Abfallstoffen hergestellt werden kann, die in holzverarbeitenden Betrieben anfallen. Trotzdem weist es vorteilhafte, mit Holz vergleichbare Festigkeits- und Verarbeitungseigenschaften auf und ist hinsichtlich von Form- und Witterungsbeständigkeit sowie Unempfindlichkeit gegen Pilz- und Insektenbefall dem natürlich gewachsenen Holz sogar überlegen.

Vorzugsweise besteht das Material, aus dem die Gewindestange gefertigt ist, ausschliesslich aus einer Zusammensetzung von Substanzen, die in einem natürlich gewachsenen Baum vorkommen, oder aus einer ähnlichen Zusammensetzung. Dadurch wird die Möglichkeit geschaffen, mit Gewindestangen versehene Produkte herzustellen, die vollständig aus ökologisch unbedenklichen, in der Natur vorkommenden Substanzen bestehen. Für die Materialzusammensetzung werden weiter vorteilhafterweise ausschliesslich Substanzen in Form von nachwachsenden Rohstoffen verwendet.

Das Material, aus dem die Gewindestange gefertigt ist, kann Lignin als Bindemittel zur Verbindung der Holzspäne miteinander enthalten. Lignin ist ein in natürlichem Holz vorkommendes Bindemittel und kann als Ersatz für synthetische Bindemittel oder Klebstoffe verwendet werden.

Das Gewinde einer erfindungsgemässen Gewindestange kann einen Steigungswinkel zwischen 3 und 20 Grad aufweisen. Aufgrund des grossen Reibungskoeffizienten des Materials, aus dem die Gewindestange gefertigt ist, bleibt trotz des grossen Steigungswinkels eine Selbsthemmung des Gewindes gewährleistet. Vorzugsweise hat das Gewinde einer erfindungsgemässen Gewindestange einen Steigungswinkel zwischen 5 und 10 Grad. Dadurch wird einerseits eine Selbsthemmung mit ausreichender Sicherheit gewährleistet, während andrerseits ein auch für Verstellzwecke ausreichend grosser Vorschub pro Gewindeumdrehung erreicht wird. Für Anwendungen der erfindungsgemässen Gewindestange zu Verstellzwecken besonders geeignet ist insbesondere ein Steigungswinkel von ungefähr 6.5 Grad.

Vorteilhafterweise ist eine erfindungsgemässe Gewindestange mit einem Gewinde versehen, das drei Gewindegänge hat. Dadurch werden bei Gewindesteigungen, wie sie oben angegeben sind, geeignete Gangbreiten der Gewindegänge erreicht.

Gemäss einer bevorzugten Ausführungsart der Erfindung erstreckt sich das Gewinde über die ganze Länge einer erfindungsgemässen Gewindestange. Dadurch wird die Möglichkeit geschaffen, die Gewindestange als Teil einer mehrteiligen Anordnung von Gewindestangen zu verwenden, bei der die Gewindestangen teleskopisch vollständig ineinander verschiebbar (bzw. ineinander verschraubbar) sind.

Eine Gewindestange gemäss der Erfindung kann hohl sein und sowohl mit einem Innengewinde an ihrer Innenfläche als auch mit einem Aussengewinde an ihrer Aussenfläche versehen sein. Eine solche Gewindestange ist dann als mittleres Teil einer mehrteiligen Anordnung von miteinander verschraubbaren Gewindestangen verwendbar.

Vorzugsweise wird ais erfindungsgemässe Gewindestange eine im wesentlichen in einem Extrudierverfahren hergestellte Gewindestange verwendet. So kann z.B. in einem Extrudierverfahren, wie es in der Druckschrift DE-C1-198 60 836 der Firma Haller Formholz beschrieben wird, eine massive oder eine hohle Stange aus einem überwiegend aus zusammengepressten Holzspänen bestehenden Material mit guten Festigkeits- und Bearbeitungseigenschaften hergestellt werden. Anschliessend kann in die Aussenfläche und/oder die Innenfläche dieser Stange ein Aussen- bzw. ein Innengewinde geschnitten werden, um eine erfindungsgemässe Gewindestange herzustellen. Als Alternative zur Herstellung in einem Extrudierverfahren kann eine erfindungsgemässe Gewindestange auch in einem Spritzgussverfahren hergestellt werden. Zweckmässigerweise werden in diesem Fall zunächst zwei Hälften der Gewindestange in einem Spritzgussverfahren hergestellt und anschliessend die beiden Hälften miteinander verklebt. Die Herstellung der Gewindestange in einem Spritzgussverfahren bietet den Vorteil, dass das Gewinde gleich im Zuge der Gewindestangenherstellung angefertigt werden kann, indem in der Spritzgussform bereits die Negativform des Gewindes ausgebildet ist.

Eine erfindungsgemässe Gewindestangenanordnung umfasst wenigstens eine erste Gewindestange, die mit einem Aussengewinde an ihrer Aussenfläche versehen ist, und eine zweite Gewindestange, die hohl ist und an ihrer Innenfläche mit einem Innengewinde versehen ist. Die beiden Gewindestangen und ihre Gewinde sind derart bemessen und ausgebildet, dass die erste Gewindestange mit ihrem Aussengewinde in das Innengewinde der zweiten Gewindestange eingreifend mit der zweiten Gewindestange verschraubbar ist. Sowohl die erste Gewindestange als auch die zweite Gewindestange sind aus einem überwiegend aus zusammengepressten Holzspänen bestehenden Material gefertigt. Indem beide Gewindestangen aus einem Material mit einem grossem Reibungskoeffizient gefertigt sind, hat die Schraubverbindung zwischen ihnen eine besonders grosse Reibung. Dadurch können sehr grosse Gewindesteigungen verwendet werden, wobei die Schraubenverbindung zwischen den beiden Gewindestangen trotzdem ihre Selbsthemmung beibehält. Zudem ist diese Gewindestangenanordnung besonders kostengünstig, da beide Gewindestangen aus einem kostengünstigen Material gefertigt sind.

Vorteilhafterweise sind sowohl die erste Gewindestange als auch die zweite Gewindestange der erfindungsgemässen Gewindestangenanordnung Gewindestangen gemäss irgend einer der vorangehend beschreibenden Ausführungsarten von Gewindestangen gemäss der Erfindung.

Vorzugsweise ist die erste Gewindestange einer erfindungsgemässen Gewindestangenanordnung als massive Stange ausgebildet. Dies erlaubt eine einfachere Fertigung als der ersten Gewindestange, wobei diese zudem eine vergleichsweise grosse Festigkeit aufweist.

Weiter ist vorzugsweise die äusserste Gewindestange einer erfindungsgemässen Gewindestangenanordnung (d.h. im Falle einer lediglich zwei Gewindestangen umfassenden Gewindestangenanordnung die zweite Gewindestange) mit einer gewindefreien Aussenfläche versehen. Eine solche Gewindestange kann rasch und einfach gefertigt werden, da auf das Schneiden eines Aussengewindes verzichtet werden kann. Zudem ist eine solche Gewindestange in ästhetischer und, falls sie zum Verschrauben von Hand vorgesehen ist, ergonomischer Hinsicht vorteilhaft.

Zweckmässigerweise sind sämtliche Gewindestangen einer erfindungsgemässen Gewindestangenanordnung im wesentlichen gleich lang und mit sich über die ganze Länge erstreckenden, durchgehenden Gewinden versehen, so dass die Gewindestangen teleskopisch vollständig ineinander verschiebbar (bzw. verschraubbar) sind.

Erfindungsgemässe Gewindestangen und Gewindestangenanordnungen sind vorteilhafterweise für den Bau von Möbeln, Bücherregalen, höhenverstellbaren Tischen oder Pulten, Messeständen, Ladeneinrichtungen und Ähnlichem verwendbar, wobei sie aufgrund der einfachen Bedienbarkeit sowohl zum Selbstbau als auch zum Bau durch den Fachmann vorgesehen sein können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Längsschnitt durch eine Gewindestangenanordnung gemäss einer bevorzugten Ausführungsart der Erfindung;
- Fig. 2.a: einen Querschnitt durch eine erste Gewindestange der Gewindestangenanordnung aus Fig. 1,

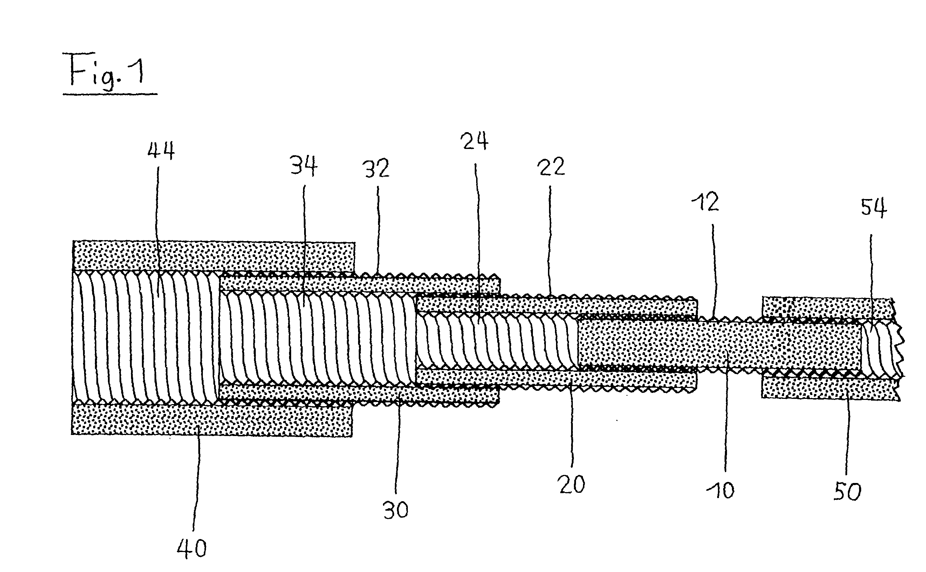

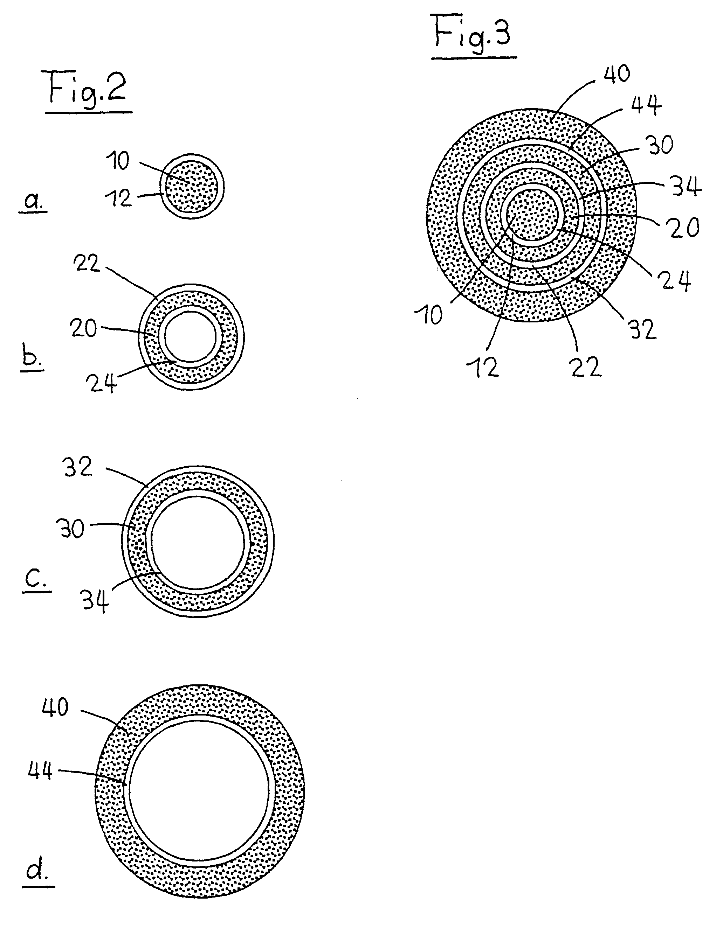

- Fig. 2.b: einen Querschnitt durch eine zweite Gewindestange der Gewindestangenanordnung aus Fig. 1,
- Fig. 2.c: einen Querschnitt durch eine dritte Gewindestange der Gewindestangenanordnung aus Fig. 1,
- Fig. 2.d: einen Querschnitt durch eine vierte Gewindestange der Gewindestangenanordnung aus Fig. 1,
- Fig. 3: einen Querschnitt durch die Gewindestangenanordnung aus Fig. 1 in einer Anordnung mit vier teleskopisch ineinander geschobenen Gewindestangen.

Grundsätzlich sind in den Figuren gleiche Teile mit gleichen Bezugszeichen versehen.

### Wege zur Ausführung der Erfindung

Die in Fig. 1 bis 3 dargestellte Gewindestangenanordnung umfasst vier Gewindestangen 10, 20, 30, 40 mit unterschiedlichen Durchmessern, die alle aus einem Material gefertigt sind, das im wesentlichen lediglich zusammengepresste Holzspäne und Lignin als Bindemittel zur Verbindung der Holzspäne miteinander umfasst.

Die Gewindestange 10 mit dem kleinsten Durchmesser der in Fig. 1 bis 3 dargestellten Gewindestangenanordnung, nachfolgend als erste Gewindestange 10 bezeichnet, ist als massive, kreiszylindrische Stange ausgebildet. Sie ist in Fig. 2.a im Querschnitt in Alleinstellung dargestellt. Diese erste Gewindestange 10 hat eine Länge von 150 mm und ist mit einem Aussengewinde 12 an ihrer Aussenfläche versehen, das sich über die ganze Länge der Gewindestange 10 erstreckt. Das Aussengewinde 12 der ersten Gewindestange 10 hat einen Nenndurchmesser von 15 mm und ist mit zwei Gewindegängen mit einem Steigungswinkel von 7.3 Grad versehen.

Die Gewindestange 20 mit dem nächst grösseren Durchmesser, in Fig. 2.b im Querschnitt in Alleinstellung dargestellt, wird nachfolgend als zweite Gewindestange 20 der in Fig. 1 bis 3 dargestellten Gewindestangenanordnung bezeichnet. Sie ist als hohle, kreiszylindrische Stange bzw. als Rohr ausgebildet und hat eine Länge von ebenfalls 150 mm. An ihrer Innenfläche ist die zweite Gewindestange 20 mit einem Innengewinde 24 versehen, das sich über die ganze Länge der zweiten Gewindestange 20 erstreckt. Dieses Innengewinde 24 hat einen Nenndurchmesser von 15 mm und ist mit zwei Gewindegängen mit einem Steigungswinkel von 7.3 Grad versehen, so dass die erste Gewindestange 10 mit ihrem Aussengewinde 12 in das Innengewinde 24 der zweiten Gewindestange 20 eingreifend mit der zweiten Gewindestange 20 verschraubbar ist. Die zweite Gewindestange 20 ist weiter mit einem Aussengewinde 22 an ihrer Aussenfläche versehen, das sich über die ganze Länge der Gewindestange 20 erstreckt. Das Aussengewinde 22 der zweiten Gewindestange 20 hat einen Nenndurchmesser von 25 mm und ist mit zwei Gewindegängen mit einem Steigungswinkel von 4.4 Grad versehen.

In Fig. 2.c ist die Gewindestange 30 mit dem nächst grösseren Durchmesser der in Fig. 1 bis 3 dargestellten Gewindestangenanordnung in Alleinstellung im Querschnitt dargestellt. Sie wird nachfolgend als dritte Gewindestange 30 dieser Gewindestangenanordnung bezeichnet. Diese dritte Gewindestange 30 ist, ähnlich wie die zweite Gewindestange 20, als hohle, kreiszylindrische Stange bzw. als Rohr ausgebildet und hat eine Länge von wiederum 150 mm. An ihrer Innenfläche ist die dritte Gewindestange 30 mit einem Innengewinde 34 versehen, das sich über die ganze Länge der dritten Gewindestange 30 erstreckt. Dieses Innengewinde 34 hat einen Nenndurchmesser von 25 mm und ist mit zwei Gewindegängen mit einem Steigungswinkel von 4.4 Grad versehen, so dass die zweite Gewindestange 20 mit ihrem Aussengewinde 22 in das Innengewinde 34 der dritten Gewindestange 30 eingreifend mit der dritten Gewindestange 30 verschraubbar ist. Die dritte Gewindestange 30 ist weiter mit einem Aussengewinde 32 an ihrer Aussenfläche versehen, das sich über die ganze Länge der Gewindestange 30 erstreckt. Dieses Aussengewinde 32 hat einen Nenndurchmesser von 36 mm und ist mit zwei Gewindegängen mit einem Steigungswinkel von 3.1 Grad versehen.

Die Gewindestange 40 mit dem grössten Durchmesser der in Fig. 1 bis 3 dargestellten Gewindestangenanordnung, nachfolgend als vierte Gewindestange 40 bezeichnet, ist als hohle, kreiszylindrische Stange ausgebildet. Sie ist in Fig. 2.d im Querschnitt in Alleinstellung dargestellt. Ihre Aussenfläche ist glatt und vollkommen gewindefrei und weist einen Aussendurchmesser von 50 mm auf. Die vierte Gewindestange 40 hat eine Länge von wiederum 150 mm. An ihrer Innenfläche ist sie mit einem Innengewinde 44 versehen, das sich über die ganze Länge der vierten Gewindestange 40 erstreckt. Dieses Innengewinde 44 hat einen Nenndurchmesser von 36 mm und ist mit zwei Gewindegängen mit einem Steigungswinkel von 3.1 Grad versehen, so dass die dritte Gewindestange 30 mit ihrem Aussengewinde 32 in das Innengewinde 44 der vierten Gewindestange 40 eingreifend mit der vierten Gewindestange 40 verschraubbar ist.

Die vier Gewindestangen 10, 20, 30, 40 der in Fig. 1 bis 3 dargestellten Gewindestangenanordnung sind teleskopisch vollständig ineinander verschiebbar bzw. ineinander verschraubbar.

In Fig. 1 ist eine weitere Gewindestange 50 dargestellt, die über die erste Gewindestange 10 mit der aus den vier Gewindestangen 10, 20, 30, 40 bestehenden Gewindestangenanordnung verbunden ist. Diese weitere Gewindestange 50 ist als hohle, kreiszylindrische Stange ausgebildet. An ihrer Innenfläche ist sie mit einem Innengewinde 54 versehen, das einen Nenndurchmesser von 15 mm hat und mit zwei Gewindegängen mit einem Steigungswinkel von 7.3 Grad versehen ist, so dass die erste Gewindestange 10 mit ihrem Aussengewinde 12 in das Innengewinde 54 der weiteren Gewindestange 50 eingreifend mit der weiteren Gewindestange 50 verschraubbar ist. Die weitere Gewindestange 50 ist mit einer glatten, gewindefreien Aussenfläche versehen.

Sämtliche der in den Fig. 1 bis 3 dargestellten Gewindestangen 10, 20, 30, 40, 50 sind hergestellt worden, indem zunächst eine aus Holzspänen und Lignin bestehende Extrudiermasse mittels von Extrudern, wie sie in der Druckschrift DE-C1-198 60 836 beschrieben werden, zu kreiszylindrischen Stangen verarbeitet wurden. Anschliessend wurden die im Extrudierverfahren hergestellten Stangen auf die gewünschten Längen abgelängt. Danach wurden die Aussen- und/oder die Innengewinde in die Aussen- bzw. Innenflächen dieser Stangen 10, 20, 30, 40, 50 geschnitten.

Zusammenfassend ist festzustellen, dass durch die vorliegende Erfindung eine Gewindestange und eine Gewindestangenanordnung geschaffen werden, die kostengünstig und insbesondere auch für Verstellzwecke geeignet sind.

## Patentansprüche

1. Gewindestange (10, 20, 30, 40), **dadurch gekennzeichnet, dass** sie aus einem überwiegend aus zusammengepressten Holzspänen bestehenden Material gefertigt ist.

2. Gewindestange (10, 20, 30, 40) nach Anspruch 1, **dadurch gekennzeichnet, dass** das Material, aus dem die Gewindestange (10, 20, 30, 40) gefertigt ist, ausschliesslich aus einer Zusammensetzung von Substanzen besteht, die in einem natürlich gewachsenen Baum vorkommen.

3. Gewindestange (10, 20, 30, 40) nach Anspruch 1 oder 2, **dadurch gekennzeichnet, dass** das Material, aus dem die Gewindestange (10, 20, 30, 40) gefertigt ist, Lignin als Bindemittel zur Verbindung der Holzspäne miteinander enthält.

4. Gewindestange (10, 20, 30, 40) nach einem der Ansprüche 1 bis 3, **dadurch gekennzeichnet, dass** das Gewinde einen Steigungswinkel zwischen 3 und 20 Grad, vorzugsweise einen Steigungswinkel zwischen 5 und 10 Grad, insbesondere einen Steigungswinkel von ungefähr 6.5 Grad hat.

5. Gewindestange nach einem der Ansprüche 1 bis 4, **dadurch gekennzeichnet, dass** das Gewinde drei Gewindegänge hat.

6. Gewindestange (10, 20, 30, 40) nach einem der Ansprüche 1 bis 5, **dadurch gekennzeichnet, dass** sich das Gewinde (12, 22, 24, 32, 34, 44) als durchgehendes Gewinde (12, 22, 24, 32, 34, 44) über die ganze Gewindestange (10, 20, 30, 40) erstreckt.

7. Gewindestange (20, 30) nach einem der Ansprüche 1 bis 6, **dadurch gekennzeichnet, dass** sie hohl ist und sowohl mit einem Innengewinde (24, 34) an ihrer Innenfläche als auch mit einem Aussengewinde (22, 32) an ihrer Aussenfläche versehen ist.

8. Gewindestange (10, 20, 30, 40) nach einem der Ansprüche 1 bis 7, **dadurch gekennzeichnet, dass** sie durch ein Extrudierverfahren hergestellt ist.

9. Gewindestangenanordnung, mit wenigstens einer ersten Gewindestange (10, 20, 30), die mit einem Aussengewinde (12, 22, 32) an ihrer Aussenfläche versehen ist, und wenigstens einer zweiten Gewindestange (20, 30, 40), die hohl ist und an ihrer Innenfläche mit einem Innengewinde (24, 34, 44) versehen ist, wobei die beiden Gewindestangen (10, 20, 30, 40) und ihre Gewinde (12, 22, 24, 32, 34, 44) derart bemessen und ausgebildet sind, dass die erste Gewindestange (10, 20, 30) mit ihrem Aussengewinde (12, 22, 32) in das Innengewinde (24, 34, 44) der zweiten Gewindestange eingreifend mit der zweiten Gewindestange (20, 30, 40) verschraubbar ist, **dadurch gekennzeichnet, dass** sowohl die erste Gewindestange (10, 20, 30) als auch die zweite Gewindestange (20, 30, 40) aus einem überwiegend aus zusammengepressten Holzspänen bestehenden Material gefertigt sind.

10. Gewindestangenanordnung nach Anspruch 9, **dadurch gekennzeichnet, dass** die erste Gewindestange (10) als massive Stange ausgebildet ist.

11. Gewindestangenanordnung nach Anspruch 9 oder 10, **dadurch gekennzeichnet, dass** die zweite Gewindestange (40) mit einer gewindefreien Aussenfläche versehen ist.

12. Gewindestangenanordnung nach einem der Ansprüche 9 bis 11, **dadurch gekennzeichnet, dass** alle Gewindestangen (10, 20, 30, 40) dieser Anordnung im wesentlichen gleich lang sind und mit sich über die ganze Länge erstreckenden, durchgehenden Gewinden (12, 22, 24, 32, 34, 44) versehen sind, so dass die Gewindestangen (10, 20, 30, 40) teleskopisch vollständig ineinander verschiebbar sind.

13. Gewindestangenanordnung nach einem der Ansprüche 9 bis 12, **dadurch gekennzeichnet, dass** das Material, aus dem die Gewindestangen (10, 20, 30, 40) gefertigt sind, ausschliesslich aus Substanzen besteht, die in einem natürlich gewachsenen Baum vorkommen.

14. Gewindestangenanordnung nach einem der Ansprüche 9 bis 13, **dadurch gekennzeichnet, dass** das Material, aus dem die Gewindestangen (10, 20, 30, 40) gefertigt sind, Lignin als Bindemittel zur Verbindung der Holzspäne miteinander enthält.

15. Gewindestangenanordnung nach einem der Ansprüche 9 bis 14, **dadurch gekennzeichnet, dass** die Gewinde (12, 22, 24, 32, 34, 44) einen Steigungswinkel zwischen 3 und 20 Grad, vorzugsweise einen Steigungswinkel zwischen 5 und 10 Grad, insbesondere einen Steigungswinkel von ungefähr 6.5 Grad haben.

16. Gewindestangenanordnung nach einem der Ansprüche 9 bis 15, **dadurch gekennzeichnet, dass** die Gewinde drei Gewindegänge haben.

17. Gewindestangenanordnung nach einem der Ansprüche 9 bis 16, **dadurch gekennzeichnet, dass** sie eine weitere hohle Gewindestange (20, 30) umfasst, die sowohl mit einem Innengewinde (24, 34) an ihrer Innenfläche als auch mit einem Aussengewinde (22, 32) an ihrer Aussenfläche versehen ist.

18. Gewindestangenanordnung nach einem der Ansprüche 9 bis 17, **dadurch gekennzeichnet, dass** die Gewindestangen (10, 20, 30, 40) durch ein Extrudierverfahren hergestellt sind.

## Claims

1. A threaded rod (10, 20, 30, 40), **characterised in that** it is manufactured of a material which mainly consists of compressed wood chips.

2. A threaded rod (10, 20, 30, 40) according to claim 1, **characterised in that** the material from which the threaded rod (10, 20, 30, 40) is manufactured consists exclusively of a composition of substances which are present in a naturally grown tree.

3. A threaded rod (10, 20, 30, 40) according to claim 1 or 2, **characterised in that** the material from which the threaded rod (10, 20, 30, 40) is manufactured contains lignin as a bonding agent for connecting the wood chips.

4. A threaded rod (10, 20, 30, 40) according to one of the claims 1 to 3, **characterised in that** the thread has a pitch angle between 3 and 20 degrees, preferably a pitch angle between 5 and 10 degrees, in particular a pitch angle of about 6.5 degrees.

5. A threaded rod according to one of the claims 1 to 4, **characterised in that** the thread has three turns.

6. A threaded rod (10, 20, 30, 40) according to one of the claims 1 to 5, **characterised in that** the thread (12, 22, 24, 32, 34, 44) extends as a continuous thread (12, 22, 24, 32, 34, 44) over the whole threaded rod (10, 20, 30, 40).

7. A threaded rod (20, 30) according to one of the claims 1 to 6, **characterised in that** it is hollow and provided with an inner thread (24, 34) on its inner surface as well as with an outer thread (22, 32) on its outer surface.

8. A threaded rod (10, 20, 30, 40) according to one of the claims 1 to 7, **characterised in that** it is manufactured by an extrusion method.

9. A threaded rod arrangement with at least one threaded rod (10, 20, 30) which is provided with an outer thread (12, 22, 32) on its outer surface, and at least one second threaded rod (20, 30, 40) which is hollow and is provided with an inner thread (24, 34, 44) on its inner surface, wherein the two threaded rods (10, 20, 30, 40) and their threads (12, 22, 24, 32, 34, 44) are dimensioned and formed in a manner such that the first threaded rod (10, 20, 30) with its outer thread (12, 22, 32) meshing into the inner thread (24, 34, 44) of the second threaded rod may be screwed with the second threaded rod (20, 30, 40), **characterised in that** the first threaded rod (10, 20, 30) as well as the second threaded rod (20, 30, 40) are manufactured of a material consisting mainly of compressed wood chips.

10. A threaded rod arrangement according to claim 9, **characterised in that** the first threaded rod (10) is designed as a solid rod.

11. A threaded rod arrangement according to claim 9 or 10, **characterised in that** the second threaded rod (40) is provided with an outer surface free of a thread.

12. A threaded rod arrangement according to one of the claims 9 to 11, **characterised in that** all threaded rods (10, 20, 30, 40) of this arrangement are essentially equally long and are provided with continuous threads (12, 22, 24, 32, 34, 44) extending over the whole length, so that the threaded rods (10, 20, 30, 40) may be fully inserted into one another in a telescopic manner.

13. A threaded rod arrangement according to one of the claims 9 to 12, **characterised in that** the material from which the threaded rods (10, 20, 30, 40) are manufactured consist exclusively of substances which are present in a naturally grown tree.

14. A threaded rod arrangement according to one of the claims 9 to 13, **characterised in that** the material from which the threaded rods (10, 20, 30, 40) is manufactured contains lignin as a bonding agent for connecting the wood chips.

15. A threaded rod arrangement according to one of the claims 9 to 14, **characterised in that** the thread has a pitch angle between 3 and 20 degrees, preferably a pitch angle between 5 and 10 degrees, in particular a pitch angle of about 6.5 degrees.

16. A threaded rod arrangement according to one of the claims 9 to 15, **characterised in that** the thread has three turns.

17. A threaded rod arrangement according to one of the claims 9 to 16, **characterised in that** comprises a further hollow threaded rod (20, 30) which is provided with an inner thread (24, 34) on its inner surface as well as with an outer thread (22, 32) on its outer surface.

18. A threaded rod arrangement according to one of the claims 9 to 17, **characterised in that** the threaded rods (10, 20, 30, 40) are manufactured by an extrusion method.

## Revendications

1. Tige filetée (10, 20, 30, 40) **caractérisée en ce qu'**elle est réalisée essentiellement en un matériau composé de copeaux de bois compressés.

2. Tige filetée (10, 20, 30, 40) suivant la revendication 1, **caractérisée en ce que** le matériau dans lequel est réalisée la tige filetée (10, 20, 30, 40) est composé exclusivement d'une combinaison de substances qui se trouvent dans un arbre qui a grandi naturellement.

3. Tige filetée (10, 20, 30, 40) suivant la revendication 1 ou 2, **caractérisée en ce que** le matériau dans lequel est réalisée la tige filetée (10, 20, 30, 40) contient de la lignine comme liant des copeaux de bois entre eux.

4. Tige filetée (10, 20, 30, 40) suivant une des revendications 1 à 3, **caractérisée en ce que** le filetage a un angle d'inclinaison compris entre 3 et 20 degrés, mais de préférence entre 5 et 10 degrés et en particulier d'environ 6,5 degrés.

5. Tige filetée (10, 20, 30, 40) suivant une des revendications 1 à 4, **caractérisée en ce que** le filetage a trois filets.

6. Tige filetée (10, 20, 30, 40) suivant une des revendications 1 à 5, **caractérisée en ce que** le filetage (12, 22, 24, 32, 34, 44), constituant un filetage continu, s'étend sur toute la longueur du filetage (10, 20, 30, 40).

7. Tige filetée (20, 30) suivant une des revendications 1 à 6, **caractérisée en ce qu'**elle est creuse et qu'elle est munie aussi bien d'un taraudage (24, 34) sur sa surface intérieure que d'un filetage extérieur (22, 32) sur sa surface extérieure.

8. Tige filetée (10, 20, 30, 40) suivant une des revendications 1 à 7, **caractérisée en ce qu'**elle est réalisée par un procédé d'extrusion.

9. Dispositif à tiges filetées comportant au moins une première tige filetée (10, 20, 30) munie d'un filetage extérieur (12, 22, 32) sur sa surface extérieure et comportant au moins une deuxième tige filetée (20, 30, 40), qui est creuse et munie sur sa surface intérieure d'un taraudage (24, 34, 44), cependant que les deux tiges filetées (10, 20, 30, 40) et leurs filetages (12, 22, 24, 32, 34, 44) sont dimensionnés et configurés de manière que la première tige filetée (10, 20, 30), pénétrant avec son filetage extérieur (12, 22, 32) dans le taraudage (24, 34, 44) de la deuxième tige filetée, puisse se visser avec la deuxième tige filetée (20, 30, 40), **caractérisé en ce qu'**aussi bien la première tige filetée (10, 20, 30) que la deuxième (20, 30, 40) sont réalisées en un matériau composé essentiellement de copeaux de bois compressés.

10. Dispositif à tiges filetées suivant la revendication 9, **caractérisé en ce que** la première tige filetée (10) est réalisée sous forme de tige pleine.

11. Dispositif à tiges filetées suivant la revendication 9 ou 10, **caractérisé en ce que** la deuxième tige filetée (40) est munie d'une surface extérieure sans filetage.

12. Dispositif à tiges filetées suivant les revendications 9 à 11, **caractérisé en ce que** toutes les tiges filetées (10, 20, 30, 40) de ce dispositif sont essentiellement de même longueur et qu'elles sont munies de filetages continus (12, 22, 24, 32, 34, 44) s'étendant sur toute la longueur, de sorte que les tiges filetées (10, 20, 30, 40) sont complètement mobiles les unes dans les autres de manière télescopique.

13. Dispositif à tiges filetées suivant les revendications 9 à 12, **caractérisé en ce que** le matériau dans lequel les tiges filetées (10, 20, 30, 40) sont réalisées est composé exclusivement de substances qui se trouvent dans un arbre qui a grandi naturellement.

14. Dispositif à tiges filetées suivant les revendications 9 à 13, **caractérisé en ce que** le matériau dans lequel les tiges filetées (10, 20, 30, 40) sont réalisées contient de la lignine comme liant des copeaux de bois entre eux.

15. Dispositif à tiges filetées suivant une des revendications 9 à 14, **caractérisée en ce que** le filetage (12, 22, 24, 32, 34, 44) a un angle d'inclinaison compris entre 3 et 20 degrés, mais de préférence entre 5 et 10 degrés et en particulier d'environ 6,5 degrés.

16. Dispositif à tiges filetées suivant une des revendications 9 à 15, **caractérisée en ce que** les filetages ont trois filets.

17. Dispositif à tiges filetées suivant une des revendications 9 à 16, **caractérisé en ce qu'**il entoure une autre tige filetée creuse (20, 30), munie aussi bien d'un taraudage (24, 34) sur sa surface intérieure que d'un filetage extérieur (22, 32) sur sa surface extérieure.

18. Dispositif à tiges filetées suivant une des revendications 9 à 17, **caractérisée en ce que** les tiges filetées (10, 20, 30, 40) sont réalisées par un procédé d'extrusion.
